(19) Europäisches Patentamt
European Patent Office
Office européen des brevets

(11) **EP 2 906 609 B1**

(12) **EUROPÄISCHE PATENTSCHRIFT**

(45) Veröffentlichungstag und Bekanntmachung des Hinweises auf die Patenterteilung:
**06.07.2016 Patentblatt 2016/27**

(21) Anmeldenummer: **13776470.0**

(22) Anmeldetag: **10.10.2013**

(51) Int Cl.:
*A63B 71/02* (2006.01)   *B32B 27/06* (2006.01)
*B32B 27/40* (2006.01)   *B32B 3/26* (2006.01)
*A63B 71/06* (2006.01)   *C08G 18/48* (2006.01)
*C08G 18/76* (2006.01)   *B29D 28/00* (2006.01)
*C08G 18/32* (2006.01)   *C08G 18/66* (2006.01)

(86) Internationale Anmeldenummer:
**PCT/EP2013/071203**

(87) Internationale Veröffentlichungsnummer:
**WO 2014/057057 (17.04.2014 Gazette 2014/16)**

(54) **FANGVORRICHTUNG AUS THERMOPLASTISCHEM POLYURETHAN**

CATCHING DEVICE MADE OF THERMOPLASTIC POLYURETHANE

DISPOSITIF ANTICHUTE À BASE DE POLYURÉTHANE THERMOPLASTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.10.2012 EP 12187967**

(43) Veröffentlichungstag der Anmeldung:
**19.08.2015 Patentblatt 2015/34**

(73) Patentinhaber: **BASF SE**
**67056 Ludwigshafen am Rhein (DE)**

(72) Erfinder:
• **SCHERZER, Dietrich**
**67433 Neustadt (DE)**
• **SCHOLZ, Guenter**
**48192 Wyandotte (US)**

• **MORITZ, Eckehard**
**80803 München (DE)**

(74) Vertreter: **BASF IP Association**
**BASF SE**
**ZRX-C6**
**67056 Ludwigshafen (DE)**

(56) Entgegenhaltungen:
**EP-A2- 0 688 665       WO-A1-2006/093461**
**WO-A1-2009/010502    DE-A1- 4 423 937**
**US-A- 4 140 826        US-A1- 2002 107 081**

• **Oertel, Günter: "Polyurethane Handbook", 30. Juni 1983 (1983-06-30), HANSER VERLAG, München, XP002692618, ISBN: 3-446-13614-2 Bd. 7, Seite 429, 469, in der Anmeldung erwähnt Sätze 429, 469**

EP 2 906 609 B1

**Beschreibung**

Gegenstand der Erfindung ist eine Fangvorrichtung auf der Basis von thermoplastischem Polyurethan.

Netze aus Polymeren für z.B. Fußball oder Tennisanlagen sind seit langem bekannt. So beschreibt DE 3037928 A1 ein Netz mit Aussparungen auf Basis synthetischer Materialien, die durch Wärmebehandlung fixiert werden und insbesondere als Fußball- und Tennisnetze verwendet werden.

Auch die DE 203 00 540 beschreibt ein Netz zum Schutz von Garageneinfahrten beim Ballspielen.

Den aus dem Stand der Technik bekannten Netzen ist gemeinsam, dass sie vorrangig zum Fangen von Bällen konstruiert sind, die eine große Oberfläche haben und damit eine relativ geringe Punktbelastung auf das Netz einwirkt. Als weiterer Nachteil bestehen diese Netze aus eingefärbten Materialien, was z.B. Beobachtung und oder Filmaufnahmen durch diese Netze hindurch, wie beispielsweise bei dem Fußballnetz oder Netzen zur Abspannung bei Skirennen beeinträchtigt.

Gänzlich ungeeignet sind bisher bekannte Netze auf Basis von handelsüblichen Polymeren für den Einsatz für sehr schnell bewegliche Massen mit hoher Dichte, wie sie beispielsweise bei Diskuswerfen oder Kugelstoßen üblich sind.

Insbesondere für diese Sportarten gibt es bisher keine Alternative zu den meist sehr abweisend aussehenden, den Sportler isolierenden und für Foto- und Filmaufnahmen problematischen Metallzäune. Auch in anderen Bereichen sind Fangvorrichtungen häufig zumindest teilweise blickdicht, was z. B. einen Sportler vom Zuschauer oder Fotograph isoliert.

Die Aufgabe der vorliegenden Erfindung bestand daher darin Fangvorrichtungen zu konstruieren, die zum einen sehr hohe mechanische Stabilitäten aufweisen, insbesondere hohe Reißfestigkeit, gute Weiterreißfestigkeit, geringe Kerbtiefe und hohe Schlagfestigkeit, um auch führ sehr schnell bewegte auch kleine Massen hoher Dichte geeignete zu sein. Zusätzlich sollten die Fangvorrichtungen in einem sehr breiten Temperaturfenster flexibel sind, um z.B. für den Sommer und Wintersport verwendet werden zu können.

Überraschenderweise konnte diese Aufgabe gelöst werden durch eine Fangvorrichtung für sich bewegende Personen und/oder Gegenstände auf der Basis von transparentem thermoplastischem Polyurethan. Das thermoplastische Polyurethan wird durch die Umsetzung jeweils mindestens einer der folgenden Ausgangsstoffe erhalten:

(a) Isocyanat
(b) gegenüber Isocyanat reaktive Verbindung, die ein zahlenmittleres Molekulargewicht (Mn) zwischen 500 g/mol und $10 \times 10^3$ g/mol aufweist
(c) Kettenverlängerer, der ein Molekulargewicht zwischen 50 g/mol und 499 g/mol aufweist,

sowie gegebenenfalls:

(d) Katalysator
(d) übliches Hilfsmittel und/oder
(e) Zusatzstoff,

wobei das für die Fangvorrichtung verwendete thermoplastische Polyurethan transparent ist. Weiter bevorzugt hat das thermoplastische Polyurethan bei einer Schichtdicke h von 8,2 mm eine Transparenzzahl T von kleiner oder gleich 3,2. Die Transparenzzahl wird nach DIN 55988 gemäß der Publikation vom 1. April 1989 bestimmt, wobei die Kennzahl 1 ohne Korrektur bestimmt wird.

Die erfindungsgemäße Fangvorrichtung ist eine Folie, ggf. mit einem Netzanteil, oder einem Netz, wie es im Folgenden näher beschrieben ist. Diese Folien oder Netze werden mit Haltevorrichtungen, z.B. Stangen und/oder Spannvorrichtungen in die gewünscht Position gebracht, um bewegte Teile, bevorzugt Gegenstände oder Personen, aufzufangen. In dieser erfindungsgemäßen Ausführungsform umfasst die Fangvorrichtung eine Folie oder ein Netz aus transparentem thermoplastischem Polyurethan, wie weiter unten im Detail ausgeführt wird, und Haltevorrichtungen. Weiterhin ist die Folie oder das Netz zwischen den Haltevorrichtungen flächig aufgespannt. Bevorzugt handelt es sich bei den bewegten Gegenständen oder Personen um Sportler und/oder Sportgerät.

Die Fangvorrichtung sind insbesondere Fang- oder Sicherheitszäune, die einen Sportbereich vom Zuschauerraum abgrenzen oder Sportler und/oder Sportgerät vom Abweichen von einem bevorzugten Aktionsbereich hindern sollen. Bevorzugtes Sportgerät für die die Fangvorrichtung verwendet werden sind Geschosse, Bälle oder Scheiben. Bevorzugt werden die Fangvorrichtungen für Luftgewehrkugeln, Kleinkalibergeschosse, Pfeile, Messer und Speere eingesetzt. Die Fangvorrichtugen werden bevorzugt auch verwendet für kleine schnell fliegende Bälle und ballähnliche Gegenstände, besonders bevorzugt Golfbälle, Tischfußballbälle, Kricketbälle, Hockeybälle, Weitstoßkugeln oder Hammerwurfkugeln oder Weitwurfsteine. Bevorzugt wird die Fangvorrichtung auch für schnell fliegende Scheiben wie Diskus-Scheibe, EishockeyPucks oder Tischpucks verwendet.

Bevorzugt ist die Fangvorrichtung ein Netz, bestehend aus Stegen und Löchern. In einer anderen Ausführungsform ist die Fangvorrichtung eine Folie. In einer weiteren bevorzugten Ausführungsform enthält eine Fangvorrichtung zumindest eine Fläche in der sie als Folie ausgebildet ist und eine andere Fläche in der die Fangvorrichtung als Netz, wie im Folgenden näher beschrieben, ausgebildet ist.

Die Herstellung von Folien ist beispielsweise in Polyurethan Handbook, ed. by Günter Oertel, 2nd ed. Vom Carl Hanser Verlag, Munich, 1994 beschrieben. Die Herstellung von Folien erfolgt bevorzugt durch Kalendrieren, dabei werden geeignete TPU Granulate in einem ersten Schritt aufgeschmolzen, ggf. mit weiteren Hilfsstoffe und/oder Zusatzstoffen vermischt und beispielsweise über Walzen zu Folien verarbeitet.

In einer anderen bevorzugten Ausführungsform ist die Fangvorrichtung ein Netz, das aus Aussparungen und Stegen besteht. Der Aussparungsanteil im Netz liegt bevorzugt zwischen 1 % und 99 %, weiter bevorzugt zwischen 10 % und 98 %, weiter bevorzugt zwischen 25 % und 97 % und besonders bevorzugt zwischen 50 % und 95 %.

Dabei wird der Anteil der Aussparung in der Weise bestimmt, dass die Fangvorrichtung, in einer Ebene ausgebreitet wird, dass ein Vielfaches einer sich wiederholenden Grundeinheit, bevorzugt 10 x 10 solcher die Netzstruktur bildenden Einheiten im 90 ° Winkel zu dieser Ebene mit einem parallelen Licht beleuchtet werden und der Schattenwurf den Anteil der Stege ausmacht, der sich mit den Aussparungen zu 100 % addiert.

Die Herstellung von Netzen ist bekannt. Einerseits werden Netze aus Einzelfäden zu Schnüren gewoben, die dann wiederum zu Netzen verknüpft oder verwoben werden. Die aus Einzelfäden verwobenen Schnüre haben im Hinblick auf die Mechanik den Vorteil, dass sie sehr flexibel sind und in Abhängigkeit der Wegstruktur besonders viel Energie auffangen können. Neben diesem klassischen Herstellungsverfahren eignet sich thermoplastisches Polyurethan insbesondere zu einer Herstellung von Netzen durch Verkleben von Schnüren, das einerseits mit geeigneten Klebstoffen, insbesondere solchen auf Basis von Polyurethanen erfolgen kann oder durch Energiezufuhr, bevorzugt nur an den Verknüpfungsstellen was auch durch verschweißen bezeichnet wird. Bevorzugt wird die Energiezufuhr so gewählt, dass das thermoplastische Polyurethan etwa auf den Schmelzpunkt erwärmt wird. Die Energiezufuhr erfolgt bevorzugt durch Strahlung, z.B. Infrarot-Strahlung, durch Mikrowelle, durch Laser oder durch thermische Erwärmung. Sie kann bei geeigneter Vorrichtung aber auch nur durch den schnell aufgebauten Druck zwischen zwei übereinanderliegenden Schnüren oder Fäden erfolgen.

Jede andere Energiezufuhr, die ein Schmelzen oder Anschmelzen des thermoplastischen Polyurethans bewirkt ist ebenfalls geeignet. Die zugeführte Energie wird so eingestellt, dass die Schnüre nicht durchtrennt werden, gleichzeitig das thermoplastische Polyurethan aber so erweicht, dass nach dem Abkühlen zwei Schnüre, basierend auf thermoplastischem Polyurethan fest miteinander verbunden sind und zu einer dauerhaften mechanische belastbaren Netzstruktur führen. Dies hat den Vorteil, dass in einem ersten Schritt der Netzherstellung nur Einzelschnüre bereitgestellt werden, die ein einem zweiten Schritt in jeder beliebigen Netzform verbunden, bevorzugt thermisch verbunden wird.

In einer Ausführungsform ergibt sich die Netzstruktur entweder durch mehr oder wenig geordnetes Legen von Fäden oder Schnüren und anschließendem Verkleben oder Verschweißen. In einer anderen Ausführungsform werden die Fäden oder Schnüre so angeordnet, dass sich eine geometrische Grundform, die bevorzugt rechteckig oder trapezförmig ist wiederholt.

In einer Ausführungsform werden die Schnüre direkt durch Extrusion hergestellt und besteht nicht aus mehreren Fäden. In einer bevorzugten Ausführungsform ist der Querschnitt der Schnüre in einer Richtung abgeflacht. Weiter bevorzugt ist die Schnur ein Band. Bevorzugt werden diese Bänder hergestellt indem eine Folie in Bahnen oder Streifen geschnitten wird. Vorteil dieses Verfahrens ist die vereinfachte und/oder preiswertere Herstellung, insbesondere aber die höhere Transparenz der aus einer Folie hergestellten Schnüre. Die hier für die Herstellung des Netzes verwendeten Fäden, Schnüre oder Bänder werden auch als Steg des Netzes bezeichnet.

In einer bevorzugten alternativen Ausführungsform ist die Fangvorrichtung eine transparente Folie auf der Basis von thermoplastischem Polyurethan, bevorzugt transparentem thermoplastischen Polyurethan, wie es in dieser Schrift im Detail ausgeführt wird. Eine Folie ist besonders einfach herzustellen, hat eine sehr hohe Transparenz und weist geringste Durchgängigkeit für kleine Gegenstände auf.

Weiterhin ist bevorzugt eine Fangvorrichtung, bei der aus einer Folie Aussparungen herausgenommen werden, so dass auf diese Weise ein Netz entsteht. Grundsätzlich können Aussparungen bereits bei der Herstellung der Folie für die Fangvorrichtung ausgespart werden. Bevorzugt werden die Aussparungen aber erst nach Herstellung einer planen Folie aus dieser entfernt. Auf diese Weise hat die verbleibende Folie, die bevorzugt eine Netzstruktur aufweist, eine besonders gute Transparenz.

Die Aussparungen sind bevorzugt gleichmäßig sich wiederholend über die Folie bzw. das daraus hergestellt Netzverteilt. Sie können durch Stanzen, Schneiden, Ausschmelzen und alle sonstigen für das nachträgliche Herstellen von Aussparungen geeigneten Methoden in die Folie gebracht werden. Unter Schneiden wird neben dem Schneiden mit mechanischen Vorrichtungen auch das Schneiden mit Lasern oder Wasserstrahl verstanden.

In einer bevorzugten Ausführungsform sind mehrere Aussparungen so geformt und/oder zueinander angeordnet, dass sich bei entfernter Betrachtung ein Muster, Bild, Schriftzug oder ähnliches ergibt.

In einer anderen bevorzugten Ausführungsform ist die Folie, aus der die Fangvorrichtung hergestellt wird, mit Bild- und oder Textelementen bedruckt. Die Möglichkeit die Folie oder das Netz zu bedrucken ist ein zusätzlicher Vorteil den insbesondere eine aus einer Folie hergestellte Fangvorrichtung aufweist.

Das Bedrucken kann einerseits auf einer herkömmlichen thermoplastischen Polyurethanfolie erfolgen, in einer bevorzugten Ausführungsform erfolgt sie aber auch auf dem transparenten thermoplastischen Polyurethan. Auf diese Weise kann sowohl die Transparenz der Folie genutzt werde, um z.B. einen Sportler zu beobachten, es kann aber gleichzeitig auch beispielsweise Werbung aufgebracht werden. Ein besonders geeignetes Verfahren um Transparenz der Fangvorrichtung und Bedrucken zu kombinieren ist der Siebdruck, da hierdurch die Transparenz großflächig erhalten bleibt.

Das Netz oder die Folie der Fangvorrichtung ist in einer bevorzugten Ausführungsform ausschließlich aus thermoplastischem Polyurethan hergestellt. Somit ist das Netz oder die Folie der Fangvorrichtung kein Laminat mit anderen Polymeren.

In anderen bevorzugten Ausführungsformen ist das thermoplastische Polyurethan mit Materialen versehen, die die Zähigkeit des Materials weiter verbessern. In einer bevorzugten Ausführungsform hat dieses Material eine Netzstruktur, das die Transparenz des thermoplastischen Polyurethans nur geringfügig beeinträchtigt. Die Netzstruktur ist an die Größe der aufzufangenden Gegenstände und/oder Personen angepasst. In einer bevorzugten Ausführungsform ist das Material dieser Netzstruktur, dass das thermoplastische Polyurethan verstärkt, aus Metall. Bevorzugt ist das Metall vollständig von dem thermoplastischen Polyurethan umgeben.

Das für die Fangvorrichtung verwendete thermoplastische Polyurethan wird durch die Umsetzung mindestens jeweils einer der folgenden Ausgangsstoffe erhalten: Organisches Isocyanat (a), gegenüber Isocyanat reaktive Verbindungen (b), Kettenverlängerer (c), sowie gegebenenfalls Katalysator (d), übliches Hilfsmittel (e) und/oder Zusatzstoff (f).

Im Folgenden sollen beispielhaft die Ausgangskomponenten und Verfahren zur Herstellung der Polyurethane dargestellt werden.

Als organische Isocyanate (a) können allgemein bekannte aliphatische, cycloaliphatische, araliphatische und/oder aromatische Isocyanate eingesetzt werden, beispielsweise Tri-, Tetra-, Penta-, Hexa-, Hepta- und/oder Oktamethylendiisocyanat, 2-Methyl-pentamethylendiisocyanat-1,5, 2-Ethyl-butylen-diisocyanat-1,4, Pentamethylen-diisocyanat-1,5, Butylendiisocyanat-1,4, 1-Isocyanato-3,3,5-trimethyl-5-isocyanato-methyl-cyclohexan (Isophorondiisocyanat, IPDI), Meta-Tetramethylxylylene Diisocyanate (TMXDI), 1,4- und/oder 1,3-Bis(isocyanatomethyl)cyclohexan, 1,4-Cyclohexan-diisocyanat, 1-Methyl-2,4- und/oder -2,6-cyclohexan-di-isocyanat und/oder 4,4'-, 2,4'- und 2,2'-Dicyclohexylmethan-diisocyanat (H12MDI), 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), 3,3'-Dimethyldiphenyl-diisocyanat, 1,2-Diphenylethandiisocyanat, 1,6-Hexamethylen-diisocyanat (HDI) und/oder Phenylendiisocyanat.

Bevorzugt werden aliphatischen Diisocyanate verwendet, weiter bevorzugt die oben genannten, insbesondere bevorzugt ist 1,6-Hexamethylen-diisocyanat (HDI), und/oder 4,4'-Dicyclohexylmethan-diisocyanat (H12MDI), letzteres liegt bevorzugt im Gemisch mit 2,4'- und 2,2'-Dicyclohexylmethan-diisocyanat vor.

Als gegenüber Isocyanaten reaktive Verbindungen (b) können die allgemein bekannten gegenüber Isocyanaten reaktiven Verbindungen eingesetzt werden, beispielsweise Polyesterole, Polyetherole und/oder Polycarbonatdiole, die üblicherweise auch unter dem Begriff "Polyole" zusammengefasst werden, mit zahlenmittleren Molekulargewichten zwischen 500 g/mol und $10 \times 10^3$ g/mol, bevorzugt zwischen $0,5 \times 10^3$ g/mol und $2 \times 10^3$ g/mol, insbesondere zwischen $0,8 \times 10^3$ g/mol und $1,5 \times 10^3$ g/mol, und bevorzugt einer mittleren Funktionalität gegenüber Isocyanaten von 1,8 bis 2,3, bevorzugt 1,9 bis 2,2, insbesondere 2. Die Funktionalität gibt die Anzahl der mit Isocyanat reaktiven Gruppen pro Molekül an. Bevorzugt setzt man Polyetherpolyole ein, beispielsweise solche auf der Basis von allgemein bekannten Startersubstanzen und üblichen Alkylenoxiden, beispielsweise Ethylenoxid, Propylenoxid und/oder Butylenoxid, bevorzugt Polyetherole basierend auf Propylenoxid-1,2 und Ethylenoxid und insbesondere Polyoxytetramethylenglykole (PTHF). Die Polyetherole weisen den Vorteil auf, dass sie eine höhere Hydrolysestabilität als Polyesterole besitzen. Weiterhin können als Polyetherole sogenannte niedrig ungesättigte Polyetherole verwendet werden. Unter niedrig ungesättigten Polyolen werden im Rahmen dieser Erfindung insbesondere Polyetheralkohole mit einem Gehalt an ungesättigten Verbindungen von kleiner als 0,02 meq/g, bevorzugt kleiner als 0,01 meq/g, verstanden. Derartige Polyetheralkohole werden zumeist durch Anlagerung von Alkylenoxiden, insbesondere Ethylenoxid, Propylenoxid und Mischungen daraus, an die oben beschriebenen Diole oder Triole in Gegenwart von hochaktiven Katalysatoren hergestellt. Derartige hochaktive Katalysatoren sind beispielsweise Cäsiumhydroxid und Multimetallcyanidkatalysatoren, auch als DMC-Katalysatoren bezeichnet. Ein häufig eingesetzter DMC-Katalysator ist das Zinkhexacyanocobaltat. Der DMC-Katalysator kann nach der Umsetzung im Polyetheralkohol belassen werden, üblicherweise wird er entfernt, beispielsweise durch Sedimentation oder Filtration. Statt eines Polyols können auch Mischungen verschiedener Polyole eingesetzt werden.

Besonders bevorzugt basiert das thermoplastische Polyurethan auf Polytetramethylenglykol (PTHF) als gegenüber Isocyanat reaktive Verbindung (b), besonders bevorzugt mit einem zahlenmittleren Molekulargewicht zwischen $0,8 \times 10^3$ g/mol und $1,5 \times 10^3$ g/mol.

Besonders bevorzugt handelt es sich bei den Aufbaukomponenten a) bis c) um difunktionelle Verbindungen, d.h. Diisocyanate (a), difunktionelle Polyole (b), bevorzugt Polyetherole und difunktionelle Kettenverlängerer (c), bevorzugt Diole.

Als Kettenverlängerer (c) können allgemein bekannte aliphatische, araliphatische, aromatische und/oder cycloaliphatische Verbindungen mit einem Molekulargewicht von 50 g/mol bis 499 g/ mol, bevorzugt mit 2 gegenüber Isocyanat reaktiven Gruppen, eingesetzt werden, bevorzugt Alkandiole mit 2 bis 10 Kohlenstoff-Atomen im Alkylrest, insbesondere 1,3-Propandiol, Butandiol-1,4, Hexandiol-1,6 und/oder Di-, Tri-, Tetra-, Penta-, Hexa-, Hepta-, Okta-, Nona- und/oder Dekaalkylen glykole, bevorzugt ist Butandiol und/oder Propandiol, d.h Buandiol oder Propandiol werden als Einzelsubstanz oder in einer Mischung enthaltend zumindest diese beiden Kettenverlängerer eingesetzt.

In einer bevorzugten Ausführungsform wird als Hauptkettenverlängerer (c1) bevorzugt ein geradkettiges oder verzweigtes Alkandiol mit 2 bis 6 Kohlenstoffatomen und als Cokettenverlängerer (c2) ein oder mehrere geradkettige oder verzweigte Alkandiole mit 2 bis 12 Kohlenstoffatomen eingesetzt, wobei sich Hauptkettenverlängerer (c1) und der Cokettenverlängerer (c2) in der Anzahl der Kohlenstoffatome unterscheiden und/oder Strukturisomere sind. Besonders bevorzugt ist der Hauptkettenverlängerer (c1) 1,4-Butandiol, der mit dem mindestens einen Cokettenverlängerer (c2) und dem Isocyanat (a), das bevorzugt 1,6-Hexamethylendiisocyant (HDI), und/oder 4,4'-Dicyclohexylmethan-diisocyanat (H12MDI) ist sowie einem der oben genannten Polyole umgesetzt wird, das bevorzugt PTHF ist.

Besonders bevorzugt ist der Cokettenverlängerer (c2) 1,3-Propandiol und/oder 1,6-Hexandiol, besonders bevorzugt 1,3-Propandiol.

Das Verhältnis der Stoffmenge n1 des Hauptkettenverlängerers (c1) an der gesamten Stoffmenge (n) aller eingesetzten Kettenverlängerer wird berechnet als n1 / n und liegt bevorzugt zwischen 0,80 und 0,999.

Die Stoffmenge eines Kettenverlängerers ist das Gewicht des eingesetzten Kettenverlängerers und beispielsweise in [g] oder anderen geeigneten Gewichtseinheiten angegeben. Die gesamte Stoffmenge (n) aller eingesetzten Kettenverlängerer ergibt sich somit aus der Summe der Einzelgewichte aller eingesetzten Kettenverlängerer.

Weiterhin bevorzugt hat das für die Herstellung der Fangeinrichtung verwendete thermoplastische Polyurethan einen Hartphasenanteil von größer 0,40, besonders bevorzugt größer 0,5 auf, wobei der Hartphasenanteil durch folgende Formel definiert ist:

$$\text{Hartphasenanteil} = \left\{ \sum_{x\,1}^{k} \left\{ \left[ (m_{KVx} / M_{KVx}) * M_{Iso}\, m_{KVx} \right] \right\} \right\} / m_{ges}$$

mit den folgenden Bedeutungen:

MKVx: molare Masse der Kettenverlängerers x in g/mol
mKVx: Masse des Kettenverlängerers x in g
Mlso: molare Masse des verwendeten Isocyanates in g/mol
mges: Gesamtmasse aller Ausgangsstoffe in g
k: Anzahl der Kettenverlängerer.

Diisocyanate (a), gegenüber Isocyanaten reaktiven Verbindungen (b), und Kettenverlängerungsmitteln (c) werden jeweils einzeln als Aufbaukomponente, gemeinsam als Aufbaukomponenten angesprochen.

Ein weiterer Erfindungsgegenstand ist die Verwendung des oben beschriebenen thermoplastischen Polyurethans für die Herstellung von Fangvorrichtungen, insbesondere der oben beschriebenen Fangvorrichtungen, weiter bevorzugt für die dort genannten Verwendungen.

Besonders bevorzugt ist ferner eine Fangvorrichtung hergestellt aus thermoplastischem Polyurethan mit einer Charpy-Kerbschlagzähigkeit bei - 30 °C nach DIN EN ISO 179-1/ 1eA von größer als 10 kJ/m$^2$, bevorzugt von größer als 15 kJ/m$^2$ aufweist.

Bevorzugte werden als Katalysatoren (d) solche zugegeben, welche insbesondere die Reaktion zwischen den NCO-Gruppen der Isocyanate (a) und den Hydroxylgruppen der Polyole der Aufbaukomponenten (b) und (c) beschleunigen. Die Katalysatoren (d) können einzeln wie auch in Abmischung miteinander zugegeben werden. Vorzugsweise sind die Katalysatoren metallorganische Verbindungen, wie Zinn-(II)-Salze von organischen Carbonsäuren, bevorzugt Zinn-(II)-dioctoat, Zinn-(II)-dilau-rat, Dibutylzinndiacetat und Dibutylzinndilaurat, oder Wismutsalze. In dem Wismutsalz liegt Wismut bevorzugt in den Oxidationsstufen 2 oder 3 vor, insbesondere in der Oxidationsstufe 3. Als Carbonsäuren werden bevorzugt Carbonsäuren mit 6 bis 14 Kohlenstoffatomen, besonders bevorzugt mit 8 bis 12 Kohlenstoffatomen verwendet. Beispiele für bevorzugte Wismutsalze sind Wismut(III)-neodecanoat, Wismut-2-etyhlhexanoat und Wismutoctanoat. Andere bevorzugte Katalysatoren sind tertiäre Amine wie Tetramethylethylendiamin, N-Methylmorpholin, Diethylbenzylamin, Triethylamin, Dimethylcyclohexyl-amin, Diazabicyclooctan, N,N'-Dimethylpiperazin, N-Methyl,N'-(4-N-Dimethylamino-) Butylpiperazin, N,N,N',N'',N''-Pentamethyldiethylendiamin oder ähnliche. Weiterhin kommen als Katalysatoren in Betracht: Amidine, wie z. B. 2,3-Dimethyl-3,4,5,6-tetrahydropyrimidin, Tris-(dialkylaminoalkyl)-s-hexahydrotriazine, insbesondere Tris-(N,N-dimethylaminopropyl)-s-hexahydrotriazin, Tetraalkylammoniumhydroxide, wie z. B.

Tetramethylammoniumhydroxid, Alkalihydroxide, wie z. B. Natriumhydroxid, und Alkalialkoholate, wie z. B. Natriummethylat und Kaliumisopropylat, sowie Alkalisalze von langkettigen Fettsäuren mit 10 bis 20 C-Atomen und gegebenenfalls seitenständigen OH-Gruppen. Je nach einzustellender Reaktivität gelangen die Katalysatoren (d) in Mengen von 0,001 Gew.-% bis 0,5 Gew.-%, bezogen auf das Gesamtgewicht des thermoplastischen Polyurethans zur Anwendung.

Neben Katalysatoren (d) können den Aufbaukomponenten (a) bis (c) auch übliche Hilfsmittel (e) und/oder Zusatzstoffe (f) hinzugefügt werden. Genannt seien beispielsweise oberflächenaktive Substanzen, Keimbildungsmittel, Gleit- und Entformungshilfen, Farbstoffe und Pigmente, Antioxidantien, z. B. gegen Hydrolyse, Licht, Hitze oder Verfärbung, anorganische und/oder organische Füllstoffe, Flammschutzmittel, Verstärkungsmittel und Weichmacher, Metalldeaktivatoren.

In einer bevorzugten Ausführungsform fallen unter die Komponente (e) auch Hydrolyseschutzmittel wie beispielsweise polymere und niedermolekulare Carbodiimide. Bevorzugt enthält das thermoplastische Polyurethan Triazol und/oder Triazolderivat und Antioxidantien in einer Menge von 0,1 Gew.-% bis 5 Gew.-% bezogen auf das Gesamtgewicht des thermoplastischen Polyurethans. Als Antioxidantien sind im allgemeinen Stoffe geeignet, welche unerwünschte oxidative Prozesse im zu schützenden Polyurethan hemmen oder verhindern. Im allgemeinen sind Antioxidantien kommerziell erhältlich. Beispiele für Antioxidantien sind sterisch gehinderte Phenole, aromatische Amine, Thiosynergisten und für Lichtstabilisatoren Organophosphorverbindungen des trivalenten Phosphors, und Hindered Amine Light Stabilizers. Beispiele für sterisch gehinderte Phenole finden sich in Plastics Additive Handbook, 5th edition, H. Zweifel, ed, Hanser Publishers, München, 2001 ([1]), S. 98-107 und S.116-121. Beispiele für Aromatische Amine finden sich in [1] S.107-108. Beispiele für Thiosynergisten sind gegeben in [1], S.104-105 und S.112-113. Beispiele für Phosphite finden sich in [1], S.109-112. Beispiele für Hindered Amine Light Stabilizer sind gegeben in [1], S.123-136.

In einer bevorzugten Ausführungsform weisen die Antioxidantien, insbesondere die phenolischen Antioxidantien, eine Molmasse von größer $0,35 \times 10^3$ g/mol, besonders bevorzugt von größer $0,7 \times 10^3$ g/mol und gleichzeitig einer maximalen Molmasse von weniger als $10 \times 10^3$ g/mol, bevorzugt weniger als $3 \times 10^3$ g/mol auf. Ferner besitzen die Antioxidantien bevorzugt einen Schmelzpunkt von kleiner 180 °C. Weiterhin werden bevorzugt Antioxidantien verwendet, die amorph oder flüssig sind. Ebenfalls können auch Gemische von zwei oder mehr Antioxidantien verwendet werden.

Geeignete Lichtstabilisatoren und Kombinationen daraus sind auch der WO 2003/031506 A1 und den entsprechenden Literaturstellen, z. B. Polyurethane Handbook, 2nd Edition von Günter Oertel, Hanser Verlag Münchenzu entnehmen.

Neben den genannten Komponenten a), b) und c) und gegebenenfalls d), e) und f) werden bevorzugt auch Kettenregler, bevorzugt mit einem zahlenmittleren Molekulargewicht von $0,031 \times 10^3$ g/mol bis $3 \times 10^3$ g/mol, eingesetzt. Solche Kettenregler sind Verbindungen, die lediglich eine gegenüber Isocyanaten reaktive funktionelle Gruppe aufweisen, wie z. B. monofunktionelle Alkohole, monofunktionelle Amine und/oder monofunktionelle Polyole. Durch solche Kettenregler kann ein Fließverhalten der thermoplastischen Polyurethane gezielt eingestellt werden. Kettenregler können im allgemeinen in einer Menge von 0 Gew.-Teile bis 5 Gew.-Teile, bevorzugt 0,1 Gew.-Teile bis 1 Gew.-Teile, bezogen auf 100 Gew.-Teile der Komponente b), d.h. des Polyols eingesetzt werden und fallen definitionsgemäß, d.h für etwaige Berechnungen von Mengenanteilen, unter die Komponente (c), d.h den Kettenverlängerer.

Zur Einstellung von Härte der TPUs können die Aufbaukomponenten (b) Polyol und (c) Kettenverlängerer in relativ breiten molaren Verhältnissen variiert werden. Bewährt haben sich molare Verhältnisse von Komponente (b) zu insgesamt einzusetzenden Kettenverlängerungsmitteln (c) von 10 : 1 bis 1 : 10, insbesondere von 1 : 1 bis 1 : 4, wobei die Härte der TPU mit zunehmendem Gehalt an Kettenverlängerer(c) ansteigt.

Bevorzugt wird thermoplastisches Polyurethan verwendet, das eine Härte von 60 Shore A bis 60 Shore D hat, bevorzugt liegt die Härte zwischen 70 Shore A und 55 Shore D und ganz besonders bevorzugt liegt die Härte zwischen 90 Shore A und 95 Shore A, wobei die Shore Härte bevorzugt nach DIN 53505 bestimmt wird.

Die Umsetzung der oben ausgeführten Aufbaukomponenten kann bei üblichen Kennzahlen erfolgen. Die Kennzahl ist definiert durch das Verhältnis der insgesamt bei der Umsetzung eingesetzten Isocyanatgruppen der Komponente (a) zu den gegenüber Isocyanaten reaktiven Gruppen, d. h. den aktiven Wasserstoffen, der Komponenten (b) und (c), d.h. der Polyole und Kettenverlängerer. Bei einer Kennzahl von 1000 kommt auf eine Isocyanatgruppe der Komponente (a) ein aktives Wasserstoffatom, d.h. eine gegenüber Isocyanaten reaktive Funktion, der Komponenten (b) und (c). Bei Kennzahlen über 1000 liegen mehr Isocyanatgruppen als OH-Gruppen vor. Die Herstellung der thermoplastischen Polurethane erfolgt bevorzugt bei einer Kennzahl zwischen 950 und 1050, besonders bevorzugt bei einer Kennzahl zwischen 970 und 1010, insbesondere zwischen 980 und 995.

Bevorzugte Ausführungsformen enthalten als Zusatzstoffe (f) organische und anorganische Pulver oder Faserstoffe, sowie Mischungen davon. Bevorzugt liegen diese Zusatzstoffe als Fasern vor. Beispiele für organischer Zusatzstoffe sind Holz, Flachs, Hanf, Ramie, Jute, Leder, Sisal, Baumwolle, Cellulose oder Aramidfasern. Beispiele für anorganische Zusatzstoffe sind Silikate, Schwerspat, Glasfasern, Zeolithe, Glas Kohlefasern, Metalle, Metalloxide oder pulverförmige anorganische Stoffe, wie Talk, Kreide, Kaolin ($Al_2(Si_2O_5)(OH)_4$), Aluminiumhydroxid, Magnesiumhydroxid, Aluminiumnitrit, Aluminiumsilikat, Bariumsulfat, Calciumcarbonat, Calciumsulfat, Kieselsäure, Quarzmehl, Aerosil, Tonerde, Glimmer oder Wollastonit.

Bevorzugte Ausführungsformen enthalten faserige Zusatzstoffe mit einer Faserlänge von 0,1 μm bis 100 μm, weiter bevorzugt im Bereich von 1 μm bis 50 μm. Bevorzugt liegen die Gehalte an Füllstoffen zwischen 5 Gew.-% bis 80 Gew.-%.

Verfahren zur Herstellung von thermoplastischen Polyurethanen, in dieser Schrift auch als TPU bezeichnet, sind allgemein bekannt. Im allgemeinen werden TPU durch Umsetzung von jeweils mindestens einem (a) Isocyanatmit (b) einer gegenüber Isocyanat reaktiven Verbindung und (c) Kettenverlängerer gegebenenfalls in Gegenwart von (d) einem Katalysator und/oder (e) einem Hilfsmittel und/oder (f) einem Zusatzstoff hergestellt wobei die einzelnen Komponenten und das daraus hergestellt Polyurethan die oben ausgeführte Spezifikation hat.

Die Herstellung der TPU kann nach den bekannten Verfahren kontinuierlich, beispielsweise mit Reaktionsextrudern oder dem Bandverfahren nach dem one-shot Verfahren oder diskontinuierlich nach dem bekannten Prepolymerprozeß erfolgen. Bei diesen Verfahren können die zur Reaktion kommenden Komponenten (a), (b) und gegebenenfalls (c), (d), (e) und/oder (f) nacheinander oder gleichzeitig miteinander vermischt werden, wobei die Reaktion unmittelbar einsetzt. Diese Verfahren sind auch in der US 3,233,025 oder EP 1 846 465 B1 beschrieben. Beim Extruderverfahren werden die Aufbaukomponenten (a), (b) sowie gegebenenfalls (c), (d), (e) und/oder (f) einzeln oder als Gemisch in den Extruder eingeführt, bevorzugt. bei Temperaturen von 100 bis 280 °C, vorzugsweise 140 bis 250 °C zur Reaktion gebracht, das erhaltene TPU wird extrudiert, abgekühlt und granuliert.

Dieses Granulat wird bevorzugt durch Extrusion zu den für die Fanvorrichtung benötigten Folien, Fäden oder Schnüre verarbeitet.

In einem alternative Verfahren werden zunächst Prepolymere hergestellt, d.h. Additionsprodukte aus Diisocanate und Polyol, ggf. Kettenverlängerer, deren zahlenmittleres Molekulargewicht deutlich unter dem des ausreagierten Polyols liegt. Dies Produkte sind häufig besser verarbeitbar und/oder lagerbar.

In dem Bandverfahren werden die Einzelkomponenten zur Herstellung es thermoplastischen Polyurethans in einem Mischkopf dosiert und das flüssige Gemisch läuft direkt auf ein darunter befindliches umlaufendes Band auf dem es bei fest eingestelltem Temperaturprofil ausreagiert. Das auf dem Band befindliche ausgehärtete Polymer wird auch als Schwarte bezeichnet. Gemäß EP 0 922 552 B1 kann das zum Polymer reagierte Material am Ende des Bandes direkt in einen Extruder zur Umformung in ein Granulat gegeben werden. Alternativ wird die Schwarte in einem ersten Schritt granuliert, auf einem separaten Extruder erneut erhitzt, durchmischt und erneut in Granulatform gebracht. Die Umformung des Schwartenmaterials ist vorteilhaft für die Homogenisierung des erzeugten Materials. Der Vorgang kann zur Optimierung der Homogenität mehrfach wiederholt werden.

Bevorzugt herschen bei der Reaktion und/oder beim Einarbeiten der Zusatz und/oder Hilfsstoffe Temperaturen von 100 °C bis 280 °C, vorzugsweise 140 °C bis 250 °C. Das erhaltene thermoplastische Polyurethan wird abgekühlt und granuliert und so für die weitere Herstellung der für die Fangeinrichtung verwendeten Fäden, Schnüre oder Bänder eingesetzt. Diese werden auf handelsüblichen Extrudern hergestellt. Für die Herstellung von Bändern oder Folien werden bevorzugt auch handelsübliche Flach- oder Blasfolienanlagen sowie insbesondere für die Folienherstellung Kalander verwendet.

Für höhere Ansprüche an die Festigkeit werden bevorzugt verstärkende Fasern auf Compoundierextrudern direkt eingebracht. Alternativ wir direkt nach der Schmelzeverarbeitung die aus einer Extrusionsdüse austretende heiße Schmelze unmittelbar auf ein mitlaufendes Gewebe oder Netze aufgebracht oder aufgepresst. In einer ebenfalls bevorzugten alternativen Ausführungsform werden fertige Folien oder Bändchen auf ein Gewebe aus Kunststoff oder Metall aufgebracht. Letzteres geschieht über Thermo- und/oder Pressverfahren.

Beispiele:

Beispiel 1

In das erste Gehäuse eines Zweiwellenextruders Typ ZSK 92 der Firma Werner & Pfleiderer, Stuttgart mit einer Verfahrenslänge von 48 D und einem radialen Schneckenspiel von 0,6 mm, wurden eine Mischung aus dem Polyol, dem Kettenverlängerer, ggf. dem Hydrolysestabilisator, Antioxidans und/oder Lichtschutzmittel mit einer Vorlagetemperatur von 150°C einerseits sowie getrennt hiervon das Isocyanat mit einer Vorlagetemperatur von 65° in das erste Gehäuse desselben zudosiert. Die Drehzahl der Doppelschnecke betrug 280 min$^{-1}$. Die Temperatureinstellwerte der Gehäuse lagen in Stromabrichtung im ersten Schneckendrittel bei 200°C, im zweiten Schneckendrittel bei 170°C und im dritten und letzten Schneckendrittel bei 190°C. Der Ausstoß betrug 850 kg/h.

Nach dem Schmelzeabschlag durch Unterwassergranulierung und integrierter zentrifugaler Trocknung wurde das Granulat bei ca. 80 bis 90°C endgetrocknet und anschließend über einen Kalender zu einer Folie von 1,5 mm Stärke geformt aus der mit einem Stanzwerkzeug eine Fangvorrichtung mit Netzform ausgestanzt wurde.

In den folgenden Beispielen werden die Basismaterialien für die Herstellung der Granulate gemäß Beispiel 1 aufgeführt, aus denen in einem zweiten Schritt Folien für die Herstellung von Fangnetzen kalandriert werden. Die Rezepturen der Beispiele sind beispielhaft. Sie decken mit und ohne Lichtschutz einen weiten Shore Härte Bereich ab und können erfindungsgemäß über viele übliche Polyester- und Polyethervarianten verändert werden ohne die Eignung als Fangnetz zu verlieren.

Beispiel 2

| | |
|---|---|
| Dicyclohexylethandiisocyanat (H12MDI) | 31 % |
| Polytetrahydrofuran (PTHF) | 62 % |
| 1,4-Butandiol | 5,6 % |
| Irganox\*) 1010 | 1 % |
| Tinuvin \*\*)622 | 0,2 % |
| Tinuvin 312 | 0,3 % |

\*) sterisch gehindertes phenolisches Antioxidans der Fa. BASF SE
\*\*) Lichtschutzmittel, sterisch gehindertes Amin der Fa. BASF SE

Die Shore Härte des Materials liegt bei etwa 80 A.

Vergleichbare Ergebnisse wurden erzielt wenn in der Rezeptur 1,4-Butandiol durch 1,3-Propandiol ersetzt wurde bzw. Mischungen von 1,4-Butandiol und 1,3-Propandiol eingesetzt wurden.

Beispiel 3

| | |
|---|---|
| 1,6-Hexamethylendiisocyant (HDI) | 52,3 % |
| Polytetrahydrofuran (PTHF) | 31,4 % |
| Butandiol-1,4 | 15,8 % |
| Irganox 1010 \*) | 0,25 % |
| Oktanol | 0,25 % |

\*) sterisch gehindertes phenolisches Antioxidans der Fa. BASF SE

Die Shore Härte des Materials liegt bei etwa 75 D.

Beispiel 4

| | |
|---|---|
| 1,6-Hexamethylendiisocyant (HDI) | 37,6 % |
| Butandioladipat 2500 | 49,5 % |
| Butandiol-1,4 | 11,5 % |
| Stabaxol P 200 \*\*\*) | 0,4 % |
| Oktanol | 0,5 % |
| Irganox 1010 \*) | 0,2 % |
| Tinuvin 622 \*\*) | 0,25 % |
| Tinuvin 213 | 0,15 % |

\*) sterisch gehindertes phenolisches Antioxidans der Fa. BASF SE
\*\*) Lichtschutzmittel, sterisch gehindertes Amin der Fa. BASF SE
\*\*\*) Hydrolyseschutzmittel für thermoplastische Polyesterpolyurethane der Fa. Rhein Chemie

Die Shore Härte des Materials liegt bei etwa 95 A.

Beispiel 5

Das thermoplastische Polyurethan der Beispiele 1 bis 4 hat bei einer Schichtdicke h von 8,2 mm eine Transparenzzahl T von kleiner oder gleich 3,2. Die Transparenzzahl wird nach DIN 55988 gemäß der Publikation vom 1. April 1989 bestimmt, wobei die Kennzahl 1 ohne Korrektur bestimmt wird.

**Patentansprüche**

1. Fangvorrichtung für sich bewegende Gegenstände oder Personen basierend auf thermoplastischem Polyurethan das durch die Umsetzung jeweils mindestens einer der folgenden Ausgangsstoffe erhalten wird:

    (a) Isocyanat
    (b) gegenüber Isocyanat reaktive Verbindung, die ein zahlenmittleres Molekulargewicht (Mn) zwischen 500 g/mol und 10 x 10³ g/mol aufweist
    (c) Kettenverlängerer, der ein Molekulargewicht zwischen 50 g/mol und 499 g/mol aufweist,

    **dadurch gekennzeichnet, dass** die Fangvorrichtung eine Folie oder ein Netz aus dem thermoplastischen Polyurethan und Haltevorrichtungen umfasst zwischen denen die Folie oder das Netz flächig aufgespannt ist und das thermoplastische Polyurethan transparent ist.

2. Fangvorrichtung nach Anspruch 1, **dadurch gekennzeichnet, dass** das thermoplastische Polyurethane bei einer Schichtdicke h von 8,2 mm eine Transparenzzahl T von kleiner oder gleich 3,2 bestimmt nach DIN 55988 aufweist, wobei die Kennzahl 1 ohne Korrektur bestimmt wird.

3. Fangvorrichtung nach einem der vorherigen Ansprüche, **dadurch gekennzeichnet, dass** die Fangvorrichtung basiert auf einem Netz, bestehend aus Stegen und Aussparungen, und/oder einer Folie.

4. Fangvorrichtung nach dem vorherigen Anspruch, **dadurch gekennzeichnet, dass** die Aussparungen des Netzes durch Entfernen von Folienteilen entstanden sind.

5. Fangvorrichtung nach einem der vorhergehenden Ansprüche, **dadurch gekennzeichnet, dass** die Fangvorrichtung ein Netz ist, bestehend aus Stegen, die zu einer Netzstruktur verbunden sind, und die Verbindung der Stege durch Verkleben oder Verschweißen erfolgt ist.

6. Fangvorrichtung nach dem vorherigen Anspruch, **dadurch gekennzeichnet, dass** die Stege Folienbahnen sind.

7. Fangvorrichtung nach einem der vorhergehenden Ansprüche, **dadurch gekennzeichnet, dass** die Fangvorrichtung mit Bild- und/oder Textelementen bedruckt ist.

8. Fangvorrichtung nach Anspruch 7, **dadurch gekennzeichnet, dass** es sich bei dem Druck um Siebdruck handelt.

9. Fangvorrichtung nach einem der vorherigen Ansprüche, **dadurch gekennzeichnet, dass** das Isocyanat aliphatisch istt.

10. Fangvorrichtung nach einem der vorherigen Ansprüche, **dadurch gekennzeichnet, dass** die gegenüber Isocyanat reaktiven Verbindung ein Polyether ist, bevorzugt mit einem zahlenmittleren Molekulargewicht von 0,5 x 10³ g/mol bis 2 x 10³ g/mol.

11. Fangvorrichtung nach einem der vorherigen Ansprüche, **dadurch gekennzeichnet dass** der Polyether Polytetrahydrofuran ist.

12. Fangvorrichtung nach einem der vorherigen Ansprüche, **dadurch gekennzeichnet, dass** der Kettenverlängerer Butandiol, Propandiol oder eine Mischung aus Propandiol und Butandiol ist.

13. Fangvorrichtung nach einem der vorherigen Ansprüche, **dadurch gekennzeichnet, dass** das thermoplastische Polyurethan einen Hartphasenanteil von mehr als 0,40 aufweist, wobei dieser Hartphasenanteil durch folgende Formel berechnet wird:

$$\text{Hartphasenanteil} = \sum_{x=1}^{k} \{[(m_{KVx}/M_{KVx})*M_{Iso}\,m_{KVx}]\}/m_{ges}$$

mit den folgenden Bedeutungen:

MKVx: Molare Masse der Kettenverlängerers x in g/mol
mKVx: Masse des Kettenverlängerers x in g
MIso: Molare Masse des verwendeten Isocyanates in g/mol mges: Gesamtmasse aller Ausgangsstoffe in g
k: Anzahl der Kettenverlängerer.

**14.** Fangvorrichtung nach einem der vorherigen Ansprüche, **dadurch gekennzeichnet, dass** der Kettenverlängerer ein Gemisch aus einem Hauptkettenverlängerer (c1) mit einem Stoffmengenanteil n1 an der Gesamtstoffmenge n der eingesetzten Kettenverlängerer und mindestens einem weiteren Nebenkettenverlängerer c2 mit einem Stoffmenegenanteil n2 an der Gesamtstoffmenge n der eingesetzten Kettenverlängerer ist, sowie gegebenenfalls weiteren Nebenkettenverlängerern cx mit dem Stoffmengenanteil nx, **dadurch gekennzeichnet, dass** das Verhältnis des Stoffmengenanteils n1 des Hauptkettenverlängers (c1) zu der Summe der Stoffmengenanteile der Nebenkettenverlängerer zwischen 0,80 und 0,999 beträgt.

**15.** Verwendung von thermoplastischem Polyurethan für die Herstellung einer Fangvorrichtung nach einem der vorangegangenen Ansprüche.

**16.** Herstellung von Fangvorrichtungen gemäß einem der Ansprüche 1 bis 14 **dadurch gekennzeichnet, dass** jeweils mindestens

(a) ein Isocyanat
(b) eine gegenüber Isocyanat reaktive Verbindung, die ein zahlenmittleres Molekulargewicht (Mn) zwischen 500 g/mol und $10 \times 10^3$ g/mol aufweist
(c) ein Kettenverlängerer, der ein Molekulargewicht zwischen 50 g/mol und 499 g/mol aufweist,

zu einem thermoplastischen Polyurethan verarbeitet werden und hieraus eine Fangvorrichtung hergestellt wird.


**Claims**

**1.** An interception device for moving articles or persons based on thermoplastic polyurethane which is obtained via the reaction in each case of at least one of the following starting materials:

(a) isocyanate
(b) compound which is reactive toward isocyanate and which has a number-average molar mass (Mn) of from 500 g/mol to $10 \times 10^3$ g/mol
(c) chain extender which has a molar mass of from 50 g/mol to 499 g/mol,

wherein the interception device comprises a foil or a network made of the thermoplastic polyurethane and retention devices between which the foil or the network has been stretched flat, and the thermoplastic polyurethane is transparent.

**2.** The interception device according to claim 1, wherein the index T for the transparency of the thermoplastic polyurethane, for a layer thickness h of 8.2 mm, is less than or equal to 3.2, determined in accordance with DIN 55988, the index 1 here being determined without correction.

**3.** The interception device according to any of the preceding claims, which is based on a network composed of fillets and cutouts, and/or of a foil.

**4.** The interception device according to the preceding claim, wherein the cutouts of the network have been produced via removal of portions of foil.

5. The interception device according to any of the preceding claims, which is a network, composed of fillets connected to give a network structure, wherein the fillets have been connected via adhesive bonding or via welding.

6. The interception device according to the preceding claim, wherein the fillets are foil webs.

7. The interception device according to any of the preceding claims, which has been printed with image elements and/or with text elements.

8. The interception device according to claim 7, wherein the print involves screen print.

9. The interception device according to any of the preceding claims, wherein the isocyanate is aliphatic.

10. The interception device according to any of the preceding claims, wherein the compound reactive toward isocyanate is a polyether, preferably with a number-average molar mass of from $0.5 \times 10^3$ g/mol to $2 \times 10^3$ g/mol.

11. The interception device according to any of the preceding claims, wherein the polyether is polytetrahydrofuran.

12. The interception device according to any of the preceding claims, wherein the chain extender is butanediol, propanediol or a mixture of propanediol and butanediol.

13. The interception device according to any of the preceding claims, wherein the thermoplastic polyurethane has a hard-phase content of more than 0.40, where this hard-phase content is calculated via the following formula:

$$\text{Hard-phase content} = \left\{ \sum_{x=1}^{k} \left[ (m_{CEx} / M_{CEx}) * M_{iso} - m_{CEx} \right] \right\} / m_{tot}$$

where the definitions are as follows:

$M_{CE_x}$: molar mass of the chain extenders x in g/mol
$mCE_x$: mass of the chain extender x in g
$M_{iso}$: molar mass of the isocyanate used in g/mol
$m_{tot}$: total mass of all of the starting materials in g
k: number of chain extenders.

14. The interception device according to any of the preceding claims, wherein the chain extender is a mixture of a molar proportion n1 of a main chain extender (cl), based on the total amount of substance n of the chain extenders used, and of a molar proportion n2 of at least one further ancillary chain extender c2, based on the total amount of substance n of the chain extenders used and also optionally of a molar proportion nx of further ancillary chain extenders cx, wherein the ratio of the molar proportion n1 of the main chain extender (c1) to the sum of the molar proportions of the ancillary chain extenders is from 0.80 to 0.999.

15. The use of thermoplastic polyurethane for producing an interception device according to any of the preceding claims.

16. A process for producing interception devices according to any of claims 1 to 14, which comprises processing in each case at least

(a) one isocyanate
(b) one compound which is reactive toward isocyanate and which has a number-average molar mass (Mn) of from 500 g/mol to 10 x $10^3$ g/mol
(c) one chain extender which has a molar mass of from 50 g/mol to 499 g/mol,

to give a thermoplastic polyurethane, and producing an interception device therefrom.

**Revendications**

1. Dispositif de capture pour articles ou personnes se déplaçant, à base d'un polyuréthane thermoplastique qui est obtenu par la réaction à chaque fois d'au moins une des matières premières suivantes :

   (a) un isocyanate,
   (b) un composé réactif avec les isocyanates, qui présente un poids moléculaire moyen en nombre (Mn) compris entre 500 g/mol et 10 x 10$^3$ g/mol,
   (c) un allongeur de chaîne, qui présente un poids moléculaire compris entre 50 g/mol et 499 g/mol,

   **caractérisé en ce que** le dispositif de capture comprend un film ou un filet en le polyuréthane thermoplastique et des dispositifs de support entre lesquels le film ou le filet est tendu à plat, et le polyuréthane thermoplastique est transparent.

2. Dispositif de capture selon la revendication 1, **caractérisé en ce que** le polyuréthane thermoplastique présente à une épaisseur de couche h de 8,2 mm un indice de transparence T inférieur ou égal à 3,2, déterminé selon DIN 55988, le nombre caractéristique 1 étant déterminé sans correction.

3. Dispositif de capture selon l'une quelconque des revendications précédentes, **caractérisé en ce que** le dispositif de capture est à base d'un filet, constitué par des traverses et des évidements, et/ou d'un film.

4. Dispositif de capture selon la revendication précédente, **caractérisé en ce que** les évidements du filet sont formés par élimination de parties d'un film.

5. Dispositif de capture selon l'une quelconque des revendications précédentes, **caractérisé en ce que** le dispositif de capture est un filet, constitué par des traverses qui sont reliées en une structure de réseau, la liaison des traverses ayant lieu par collage ou soudage.

6. Dispositif de capture selon la revendication précédente, **caractérisé en ce que** les traverses sont des bandes de film.

7. Dispositif de capture selon l'une quelconque des revendications précédentes, **caractérisé en ce que** le dispositif de capture est imprimé avec des éléments d'image et/ou de texte.

8. Dispositif de capture selon la revendication 7, **caractérisé en ce que** l'impression est la sérigraphie.

9. Dispositif de capture selon l'une quelconque des revendications précédentes, **caractérisé en ce que** l'isocyanate est aliphatique.

10. Dispositif de capture selon l'une quelconque des revendications précédentes, **caractérisé en ce que** le composé réactif avec les isocyanates est un polyéther, de préférence ayant un poids moléculaire moyen en nombre de 0,5 x 10$^3$ g/mol à 2 x 10$^3$ g/mol.

11. Dispositif de capture selon l'une quelconque des revendications précédentes, **caractérisé en ce que** le polyéther est le polytétrahydrofurane.

12. Dispositif de capture selon l'une quelconque des revendications précédentes, **caractérisé en ce que** l'allongeur de chaîne est le butanediol, le propanediol ou un mélange de propanediol et de butanediol.

13. Dispositif de capture selon l'une quelconque des revendications précédentes, **caractérisé en ce que** le polyuréthane thermoplastique présente une proportion de phase dure de plus de 0,40, cette proportion de phase dure étant calculée par la formule suivante :

$$\text{proportion} \quad \text{de} \quad \text{phase} \quad \text{dure}$$

$$\sum_{x=1}^{k} \{[(m_{KVx}/M_{KVx})^* M_{Iso} \, m_{KVx}]\}/m_{ges}$$

avec les significations suivantes :

$M_{KVx}$ : masse molaire de l'allongeur de chaîne x en g/mol
$m_{KVx}$ : masse de l'allongeur de chaîne x en g
$M_{Iso}$ : masse molaire de l'isocyanate utilisé en g/mol
$m_{ges}$ : masse totale de toutes les matières premières en g
k : nombre d'allongeurs de chaîne.

14. Dispositif de capture selon l'une quelconque des revendications précédentes, **caractérisé en ce que** l'allongeur de chaîne est un mélange d'un allongeur de chaîne principal (c1) en une proportion n1 par rapport à la quantité totale n des allongeurs de chaîne utilisés et d'au moins un autre allongeur de chaîne secondaire c2 en une proportion n2 par rapport à la quantité totale n des allongeurs de chaîne utilisés, ainsi qu'éventuellement d'autres allongeurs de chaîne secondaires cx en la proportion nx, **caractérisé en ce que** le rapport entre la proportion n1 de l'allongeur de chaîne principal (c1) et la somme des proportions des allongeurs de chaîne secondaires est compris entre 0,80 et 0,999.

15. Utilisation d'un polyuréthane thermoplastique pour la fabrication d'un dispositif de capture selon l'une quelconque des revendications précédentes.

16. Fabrication de dispositifs de capture selon l'une quelconque des revendications 1 à 14, **caractérisé en ce qu'**à chaque fois au moins

(a) un isocyanate,
(b) un composé réactif avec les isocyanates, qui présente un poids moléculaire moyen en nombre (Mn) compris entre 500 g/mol et 10 x $10^3$ g/mol,
(c) un allongeur de chaîne, qui présente un poids moléculaire compris entre 50 g/mol et 499 g/mol,

sont transformés en un polyuréthane thermoplastique et un dispositif de capture est fabriqué à partir de celui-ci.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3037928 A1
- DE 20300540
- WO 2003031506 A1
- US 3233025 A
- EP 1846465 B1
- EP 0922552 B1

**In der Beschreibung aufgeführte Nicht-Patentliteratur**

- Polyurethan Handbook. Carl Hanser Verlag, 1994
- Plastics Additive Handbook. Hanser Publishers, 2001, vol. 1, 98-107, 116-121
- **GÜNTER OERTEL.** B. Polyurethane Handbook. Hanser Verlag